# EUROPEAN PATENT SPECIFICATION

(11) **EP 3 909 554 B1**
(45) Date of publication and mention of the grant of the patent: **21.08.2024**
(21) Application number: 21171527.1
(22) Date of filing: 30.04.2021
(51) Int. Cl.: A61G 3/08, B62D 25/20, B60P 7/08

(54) **A TRANSPORTATION VEHICLE FOR A PERSON OR PERSONS SITTING IN A WHEELCHAIR OR WHEELCHAIRS**
TRANSPORTFAHRZEUG FÜR EINE PERSON ODER PERSONEN, DIE IN EINEM ROLLSTUHL ODER IN ROLLSTÜHLEN SITZEN
VÉHICULE DE TRANSPORT POUR UNE OU PLUSIEURS PERSONNES ASSISES DANS UN OU DES FAUTEUILS ROULANTS

(30) Priority: 14.05.2020 NL 2025581
(43) Date of publication of application: 17.11.2021
(73) Proprietor: Tribus Beheer B.V., 3543 AC Utrecht (NL)
(72) Inventor: DUNNINK, Bram, 3543 AC UTRECHT (NL)
(74) Representative: van Breda, Jacobus

(56) References cited:
- EP-A1- 1 701 860
- EP-A1- 2 108 349
- GB-A- 2 427 176

## Description

The invention relates to a transportation vehicle for a person or persons sitting in a wheelchair or wheelchairs, comprising a top floor mounted on top of an existing floor of the vehicle, wherein the top floor has cavities that house arrestable rollers supporting safety straps for fixing the wheelchair or wheelchairs in position on the top floor. The invention also relates to said top floor.

Such a transportation vehicle is known from WO2005/037597 and in day-to-day use for the transportation of people sitting in a wheelchair.

The transportation of people sitting in a wheelchair requires specific measures to secure that both the wheelchair and the person sitting in the wheelchair are safely tied to the transportation vehicle so as to prevent injuries during a collision. For this purpose the known transportation vehicle is tailored with specific features, notably the above mentioned rollers with safety straps, that make it possible that the wheelchair is fixated in position on the top floor of the transportation vehicle.

It is comparatively expensive to convert a standard transportation vehicle and make it suitable for the transportation of wheelchairs with persons sitting in these wheelchairs. One object of the invention is to reduce these conversion costs.

Moreover there is a need in this field to increase the versatility of a vehicle that is converted in a transportation vehicle, so that it can easily accommodate different wheelchair arrangements. Another object is therefore to make it easier to accommodate different wheelchair arrangements in such a converted vehicle.

Still another object of the invention is to reduce the weight added with the top floor to the converted vehicle, without sacrificing rigidity in the longitudinal and transversal direction.

The invention is aimed to address these and other objects and to provide advantages that will become apparent from the following disclosure.

The top floor and the transportation vehicle of the invention have the features of one or more of the appended claims.

According to a first aspect of the invention the top floor comprises a frame and an open U-profile or U-profiles consisting of a bottom wall and two oppositely arranged upstanding sidewalls on the bottom wall only, which open U-profile or U-profiles provide the cavity or cavities which house the rollers, wherein said U-profiles are mounted on said frame comprising longitudinal runners and transversal girders to provide the top floor with longitudinal and transversal rigidity. The term 'longitudinal' as used herein refers to the normal forward direction of travel of the vehicle, whereas the term `transversal' refers to a direction which is at right angles with the longitudinal direction.

The construction with the U-profile or U-profiles provides versatility and reduces weight, since the U-profile or U-profiles are then only applied at places where rollers with safety straps need to be accommodated. It is therefore preferred in the invention that the said U-profile or U-profiles extend only over a restricted part of the top floor which is in essence limited to provide only the cavity or cavities housing the rollers with safety straps.

The reduction of weight and versatility of the transportation vehicle of the invention is further promoted in an embodiment wherein there are multiple U-profiles located in the top floor one behind the other and/or one adjacent to the other for fixing a series of wheelchairs behind and/or next to each other on top of the top floor, wherein the multiple U-profiles leave a space between them without the respective U-profiles abutting against each other.

Preferably the top floor comprises a composite surface layer on top of the U-profile or U-profiles. Applying such a composite surface layer is a low weight solution for completing the top floor.

Preferably the composite surface layer comprises a PP core layer with an anti-slip layer on top. This provides both strength and safety in use.

Suitably the ant-slip layer is one of a glass fiber liner or a carbon fiber liner.

In a further aspect of the invention the composite surface layer is provided on top of the frame with a glue connection whilst avoiding screw connections.

Advantageously the glue connection comprises double-sided tape.

The invention will hereinafter be further elucidated with reference to the drawing of an exemplary embodiment of parts of a transportation vehicle

In the drawing:
- figure 1 provides a perspective view at a floor of a transportation vehicle according to the invention;
- figure 2 shows an exploded view of a part of the floor of figure 1;
- figure 3 provides a view at some non-assembled elements of the floor of figure 1;
- figure 4 provides another view at some non-assembled elements of the floor of figure 1; and
- figure 5 provides a top perspective view at the floor of figure 1.

Whenever in the figures the same reference numerals are applied, these numerals refer to the same parts.

The appended figures are for clarity limited to show only those features that are relevant for the invention. The skilled person knows how a transportation vehicle for a person or persons sitting in a wheelchair or wheelchairs is construed, and this is therefore not shown in the figures.

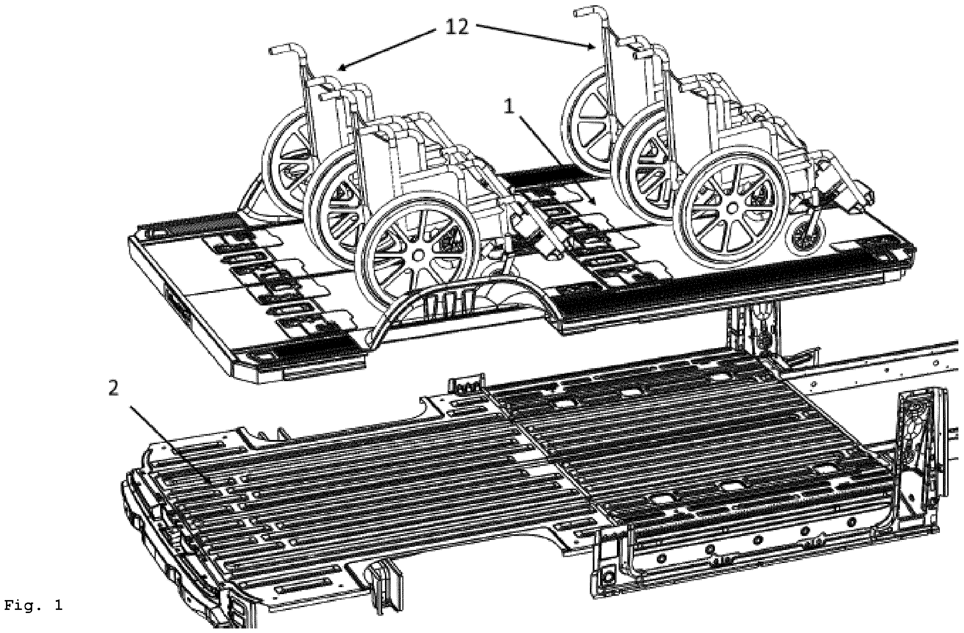

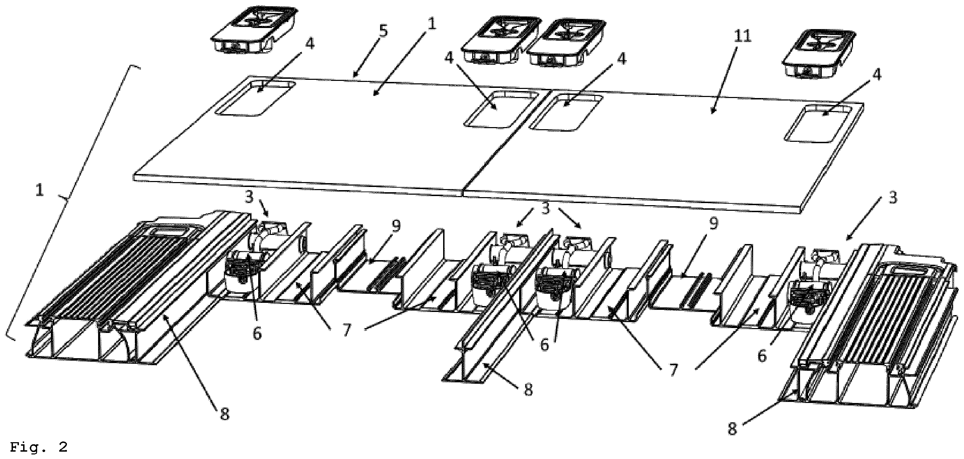

Common to the prior art and to the invention is that the transportation vehicle comprises a top floor 1 mounted on top of an existing floor 2 of the vehicle, as shown in figure 1. Figure 2 shows that the top floor 1 has cavities 3 that are approachable through apertures 4 in a cover layer or surface layer 5 that forms part of the top floor 1. The cavities 3 house arrestable rollers 6 supporting safety straps for fixing the wheelchair or wheelchairs 12 shown in figure 1 in position on the top floor 1. The provision of the arrestable rollers 6 with the safety straps in the floor is as such also known from the prior art, and not further elucidated with reference to the figures.

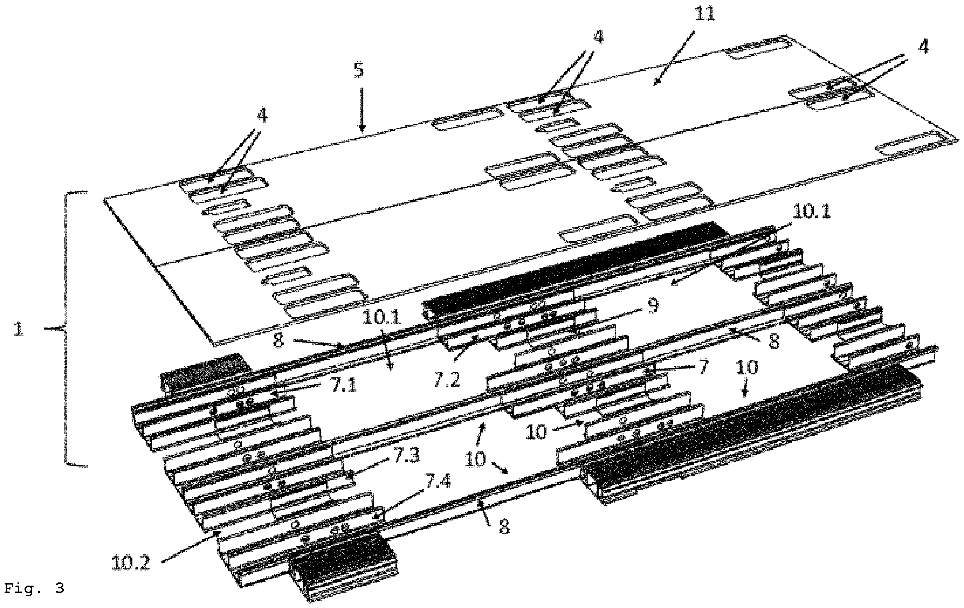

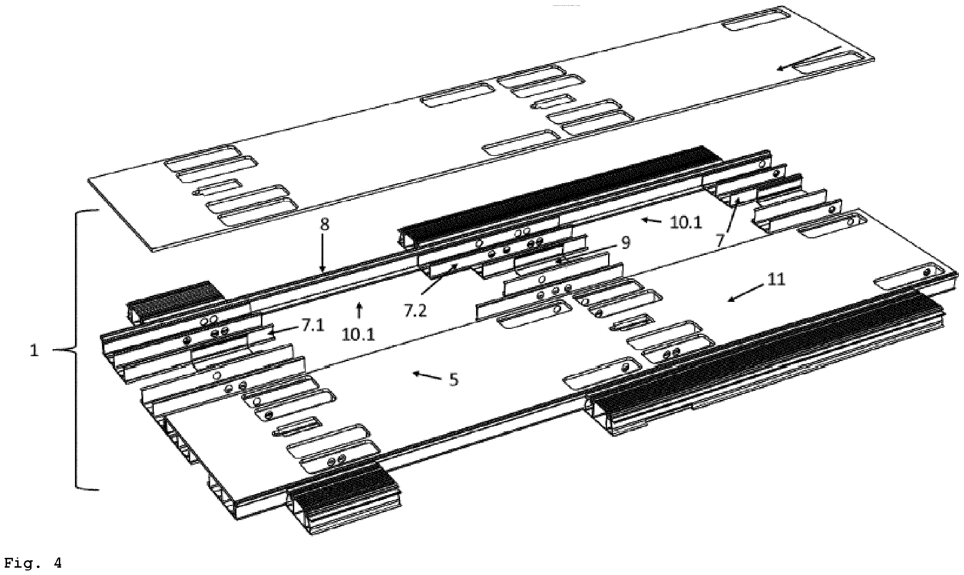

Turning further to figure 2, it is shown that the top floor 1 comprises an open U-profile or U-profiles 7 consisting of a bottom wall and two oppositely arranged upstanding sidewalls on the bottom wall only, which open U-profile or U-profiles 7 provide the cavity or cavities 3 which house the rollers 6, wherein said U-profiles 7 are mounted on a frame with longitudinal runners 8 and transversal girders 9 to provide the top floor 1 with longitudinal and transversal rigidity. A better view at the frame with the longitudinal runners 8, the transversal girders 9 and the U-profiles 7 is provided by figures 3 and 4. These figures 3 and 4 also depict that the said U-profile or U-profiles 7 extend only over a restricted part of the top floor 1 which is in essence limited to provide only the cavity or cavities 3 housing the rollers 6. See for instance the restricted length of the multiple U-profiles 7.1, 7.2, 7.3 and 7.4.

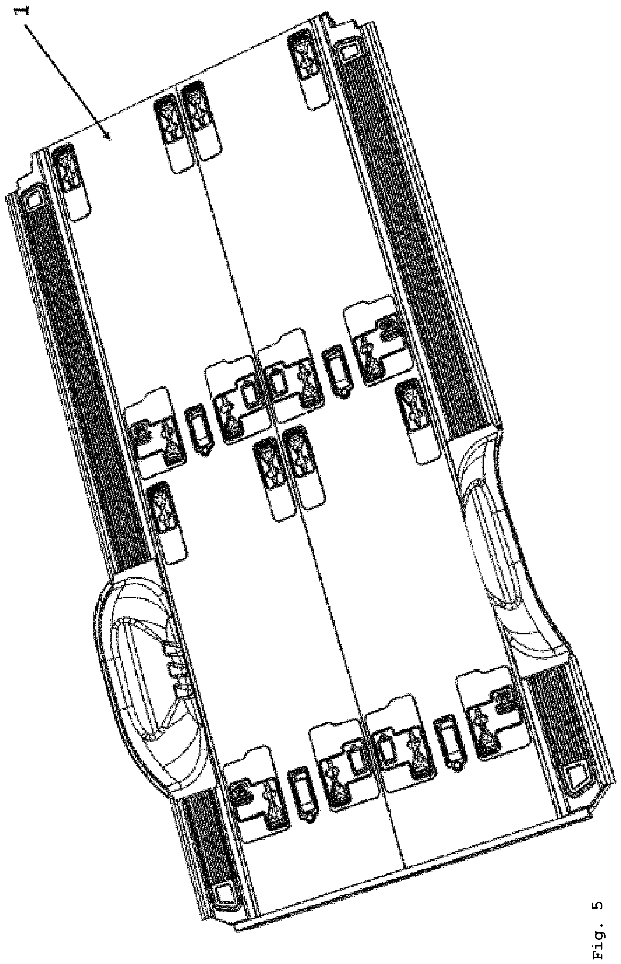

Figures 3 and 4 further depict that wherein there are indeed multiple U-profiles 7.1, 7.2, 7.3 and 7.4 located in the top floor 1 one behind the other (7.1 and 7.2) and/or one adjacent to the other (7.3 and 7.4), the multiple U-profiles 7.1, 7.2, 7.3 and 7.4 leave a space 10.1 and 10.2 between them without the respective U-profiles 7.1, 7.2, 7.3 and 7.4 abutting against each other. The location of the U-profiles 7.1, 7.2, 7.3 and 7.4 is then each time selected to enable fixing a series of wheelchairs one behind the other and/or next to each other on top of the top floor 1. These locations are clearly recognizable in figure 5 showing the completed top floor 1.

As already mentioned with reference to figure 2, also figure 3 and 4 show that the top floor 1 comprises a composite cover layer or surface layer 5 on top of the U-profile or U-profiles 7. Preferably the composite surface layer 5 comprises a PP core layer with an anti-slip layer 11 on top. The ant-slip layer 11 is preferably selected to be one of a glass fiber liner or a carbon fiber liner.

The composite surface layer is provided on top of the frame of the longitudinal runners 8 and transversal girders 9 with a glue connection whilst avoiding screw connections. Preferably the glue connection comprises double-sided tape.

Although the invention has been discussed in the foregoing with reference to an exemplary embodiment of a floor of the transportation vehicle of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. A top floor (1) for mounting on top of a floor (2) of a vehicle, wherein the top floor (1) has cavities (3) that house arrestable rollers (6) supporting safety straps for fixing the wheelchair or wheelchairs (12) in position on the top floor (1), **characterized in that** the top floor (1) comprises a frame and an open U-profile or U-profiles (7) consisting of a bottom wall and two oppositely arranged upstanding sidewalls on the bottom wall only, which open U-profile or U-profiles (7) provide the cavity or cavities (3) which house the rollers (6), wherein said U-profiles (7) are mounted on said frame comprising longitudinal runners (8) and transversal girders (9) to provide the top floor (1) with longitudinal and transversal rigidity.

2. The top floor according to claim 1, **characterized in that** the said U-profile or U-profiles (7) extend only over a restricted part of the top floor (1) which is in essence limited to provide only the cavity or cavities (3) housing the rollers (6).

3. The top floor according to claim 1 or 2, **characterized in that** wherein there are multiple U-profiles (7.1, 7.2, 7.3, 7.4) located in the top floor (1) one behind the other and/or one adjacent to the other for fixing a series of wheelchairs (12) behind and/or next to each other on top of the top floor (1), wherein the multiple U-profiles (7.1, 7.2, 7.3, 7.4) leave a space (10.1, 10.2) between them without the respective U-profiles (7.1, 7.2, 7.3, 7.4) abutting against each other.

4. The top floor according to any one of claims 1 - 3, **characterized in that** the top floor (1) comprises a composite surface layer (5) on top of the U-profile or U-profiles (7, 7.1, 7.2, 7.3, 7.4).

5. The top floor according to claim 4, **characterized in that** the composite surface layer (5) comprises a PP core layer with an anti-slip layer (11) on top.

6. The top floor according to claim 5, **characterized in that** the ant-slip layer (11) is one of a glass fiber liner or a carbon fiber liner.

7. The top floor according to any one of claims 1 - 3 and any one of claims 4 - 6, **characterized in that** the composite surface layer (5) is provided on top of the frame with a glue connection whilst avoiding screw connections.

8. The top floor according to claim 7, **characterized in that** the glue connection comprises double-sided tape.

9. A transportation vehicle for a person or persons sitting in a wheelchair or wheelchairs, comprising a top floor (1) according to any one of claims 1 - 8.

## Patentansprüche

1. Oberer Boden (1) zur Montage über einem Boden (2) eines Fahrzeugs, wobei der obere Boden (1) Ausnehmungen (3) aufweist, welche arretierbare Walzen (6) aufnehmen, welche Sicherheitsbänder zum Halten der Position des Rollstuhls oder der Rollstühle (12) auf dem oberen Boden (1) abstützen, **dadurch gekennzeichnet, dass** obere Boden (1) einen Rahmen und ein offenes U-förmiges Profil oder U-förmige Profile (7), bestehend aus einer Bodenwand und zwei gegenüberliegend angeordneten, lediglich auf der Bodenwand stehenden Seitenwänden, aufweist, wobei das offene U-förmige Profil oder die U-förmigen Profile (7) die Ausnehmung oder Ausnehmungen (3) bereitstellen, welche die Walzen (6) aufnehmen, wobei die U-förmigen Profile (7) an dem Rahmen montiert sind und longitudinale Laufschienen (8) und transversale Tragbalken (9) aufweisen, um den oberen Boden (1) mit longitudinaler und transversaler Steifigkeit auszustatten.

2. Oberer Boden (1) nach Anspruch 1, **dadurch gekennzeichnet, dass** das U-förmige Profil oder die U-förmigen Profile (7) sich lediglich über einen eingeschränkten Bereich des oberen Bodens (1) erstrecken, welcher im Wesentlichen beschränkt ist, um lediglich die Ausnehmung oder Ausnehmungen (3), welche die Walzen (6) aufnehmen, bereitzustellen.

3. Oberer Boden (1) nach einem der Ansprüche 1 oder 2, **dadurch gekennzeichnet, dass** mehrere U-förmige Profile (7.1, 7.2, 7.3, 7.4) in dem oberen Boden (1), eines nach dem anderen und/oder eines neben dem anderen, angeordnet sind, um eine Reihe von Rollstühlen (12) hinter- und/oder nebeneinander auf dem oberen Boden (1) festzuhalten, wobei die mehreren U-förmigen Profile (7.1, 7.2, 7.3, 7.4) einen Abstand (10.1, 10.2) zwischen ihnen frei halten, ohne dass die entsprechenden U-förmigen Profile (7.1, 7.2, 7.3, 7.4) aneinander anliegen.

4. Oberer Boden (1) nach einem der Ansprüche 1-3, **dadurch gekennzeichnet, dass** der obere Boden (1) eine Verbundstoff-Oberflächenschicht (5) über dem U-förmigen Profil oder den U-förmigen Profilen (7, 7.1, 7.2, 7.3, 7.4), aufweist.

5. Oberer Boden (1) nach Anspruch 4, **dadurch gekennzeichnet, dass** die Verbundstoff-Oberflächenschicht (5) eine PP-Kernschicht mit einer Anti-Rutsch-Schicht (11) darüber aufweist.

6. Oberer Boden (1) nach Anspruch 5, **dadurch gekennzeichnet, dass** die Anti-Rutsch-Schicht (11) als Glasfaser-Schutzfolie und/oder als Kohlenstofffaser-Schutzfolie ausgebildet ist.

7. Oberer Boden (1) nach einem der Ansprüche 1-3 und einem der Ansprüche 4-6, **dadurch gekennzeichnet, dass** die Verbundstoff-Oberflächenschicht (5) mit einer Klebeverbindung auf dem Rahmen aufgebracht wird während Schraubenverbindungen vermieden werden.

8. Oberer Boden (1) nach Anspruch 7, **dadurch gekennzeichnet, dass** die Klebeverbindung ein doppelseitiges Klebeband aufweist.

9. Beförderungsfahrzeug für eine Person oder Personen, welche in einem Rollstuhl oder Rollstühlen sitzen, aufweisend einen oberen Boden (1) nach einem der Ansprüche 1-8.

## Revendications

1. Plancher supérieur (1) destiné à être monté sur une partie supérieure d'un plancher (2) d'un véhicule, dans lequel le plancher supérieur (1) a des cavités (3) qui logent des roulettes blocables (6) supportant des sangles de sécurité pour fixer le fauteuil roulant ou les fauteuils roulants (12) en position sur le plancher supérieur (1), **caractérisé en ce que** le plancher supérieur (1) comprend un cadre et un profil en U ou des profils en U ouvert (s) (7) composé (s) d'une paroi inférieure et de deux parois latérales droites agencées de manière opposée sur la paroi inférieure uniquement, ledit profil en U ou lesdits profils en U ouvert(s) (7) fournissant la cavité ou les cavités (3) qui loge(nt) les roulettes (6), dans lequel lesdits profils en U (7) sont montés sur ledit cadre comprenant des glissières longitudinales (8) et des poutres transversales (9) pour doter le plancher supérieur (1) d'une rigidité longitudinale et transversale.

2. Plancher supérieur selon la revendication 1, **caractérisé en ce que** ledit profil en U ou lesdits profils en U (7) s'étend(ent) uniquement sur une partie restreinte du plancher supérieur (1) qui est par essence limitée pour fournir seulement la cavité ou les cavités (3) logeant les roulettes (6).

3. Plancher supérieur selon la revendication 1 ou 2, **caractérisé en ce que** de multiples profils en U (7.1, 7.2, 7.3, 7.4) sont situés dans le plancher supérieur (1) les uns derrière les autres et/ou adjacents les uns aux autres pour fixer une série de fauteuils roulants (12) derrière et/ou à côté les uns des autres sur la partie supérieure du plancher supérieur (1), dans lequel les multiples profils en U (7.1, 7.2, 7.3, 7.4) laissent un espace (10.1, 10.2) entre eux sans que les profils en U respectifs (7.1, 7.2, 7.3, 7.4) ne viennent buter les uns contre les autres.

4. Plancher supérieur selon l'une quelconque des revendications 1 à 3, **caractérisé en ce que** le plancher supérieur (1) comprend une couche de surface composite (5) sur la partie supérieure du profil en U ou des profils en U (7, 7.1, 7.2, 7.3, 7.4).

5. Plancher supérieur selon la revendication 4, **caractérisé en ce que** la couche de surface composite (5) comprend une couche centrale PP avec une couche antidérapante (11) sur la partie supérieure.

6. Plancher supérieur selon la revendication 5, **caractérisé en ce que** la couche antidérapante (11) est l'un d'un revêtement interne de fibres de verre ou d'un revêtement interne de fibres de carbone.

7. Plancher supérieur selon l'une quelconque des revendications 1 à 3 et l'une quelconque des revendications 4 à 6, **caractérisé en ce que** la couche de surface composite (5) est disposée sur la partie supérieure du cadre avec un raccord de colle tout en évitant les raccords de vis.

8. Plancher supérieur selon la revendication 7, **caractérisé en ce que** le raccord de colle comprend un ruban à double face.

9. Véhicule de transport pour une personne ou des personnes assise(s) dans un fauteuil roulant ou des fauteuils roulants, comprenant un plancher supérieur (1) selon l'une quelconque des revendications 1 à 8.
